# EUROPEAN PATENT APPLICATION

(11) **EP 4 624 219 A1**
(43) Date of publication of application: **01.10.2025**
(21) Application number: 25166277.1
(22) Date of filing: 26.03.2025
(51) Int. Cl.: B60K 35/10, B60K 35/20, B60K 35/60, B62D 1/04

(54) **STEERING WHEEL FOR A MOTOR VEHICLE WITH A GLASS CONTROL INTERFACE**

(30) Priority: 28.03.2024 IT 202400007018
(71) Applicant: FERRARI S.p.A., 41100 Modena (IT)
(72) Inventor: CONIGLIARO, Vito, 41100 MODENA (IT); MARCON, Davide, 41100 MODENA (IT); CARDITELLO, Tommaso, 41100 MODENA (IT)
(74) Representative: Studio Torta S.p.A.

(57) **Abstract**

A steering wheel (3) for a motor vehicle (1), the steering wheel having an axis of rotation (A) perpendicular to a plane of rotation of the steering wheel and comprising a control box (9, 10), in turn comprising a printed circuit board (PCB), a casing (18) defining a cavity housing the printed circuit board (PCB), a cover (19) attached to the casing (18) so as to cover the cavity with an inner face (19a) facing the cavity according to a direction entering the plane of rotation of the steering wheel and an outer face (19b) opposite the inner face (19a) so as to face, in use, a user of the steering wheel (3), and at least one controller (11, 12, 13, 14, 15, 16), which is manipulatable by the user, is coupled to the casing (18) in a movable manner with respect to the cover (19) and is arranged through a relative seat (20) formed on the cover along said direction, characterised in that the cover (19) is a transparent plate or a glass plate.

## Description

### CROSS-REFERENCE TO RELATED APPLICATIONS

This patent application claims priority from Italian patent application no. 102024000007018 filed on March 28, 2024, the entire disclosure of which is incorporated herein by reference.

### TECHNICAL FIELD

The invention relates to a steering wheel for a motor vehicle, in particular a sports motor vehicle.

### PRIOR ART

The automotive industry, especially when dealing with high-end motor vehicles, is constantly looking for improvements to increase the driver's comfort in controlling their motor vehicle.

One of the most important aspects concerns the arrangement and configuration of the controllers for controlling the accessory functions of the motor vehicle, such as levers, handles, buttons, knobs, switches and the like, for example for operating the windscreen wiper, changing the set-up of the motor vehicle, setting the configuration of the control unit, selecting a desired behaviour of the suspensions or other typical functions.

Generally speaking, there is a need not only for the aforementioned controllers to be arranged in comfortable positions for the driver, but also for the same controllers to be easily traceable by the driver in an immediate manner.

In addition, more in particular, the controllers must be intuitive and have an easy recognisability, possibly attracting the attention of the driver intending to operate them, though preferably without distracting the latter from driving the motor vehicle.

Not least, in the search for a solution to the aforementioned needs, a necessary aspect to be considered could also be a need to respect some aesthetic limits, according to which the controllers must have an attractive appearance, as well as being intuitive and suitable for capturing the driver's attention.

An object of the invention is to fulfil at least one of the needs discussed above, preferably in a simple and reliable fashion.

### DESCRIPTION OF THE INVENTION

The object is reached by a steering wheel for a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle comprising a steering wheel according to an embodiment of the invention,
- figure 2 is a front view of the steering wheel,

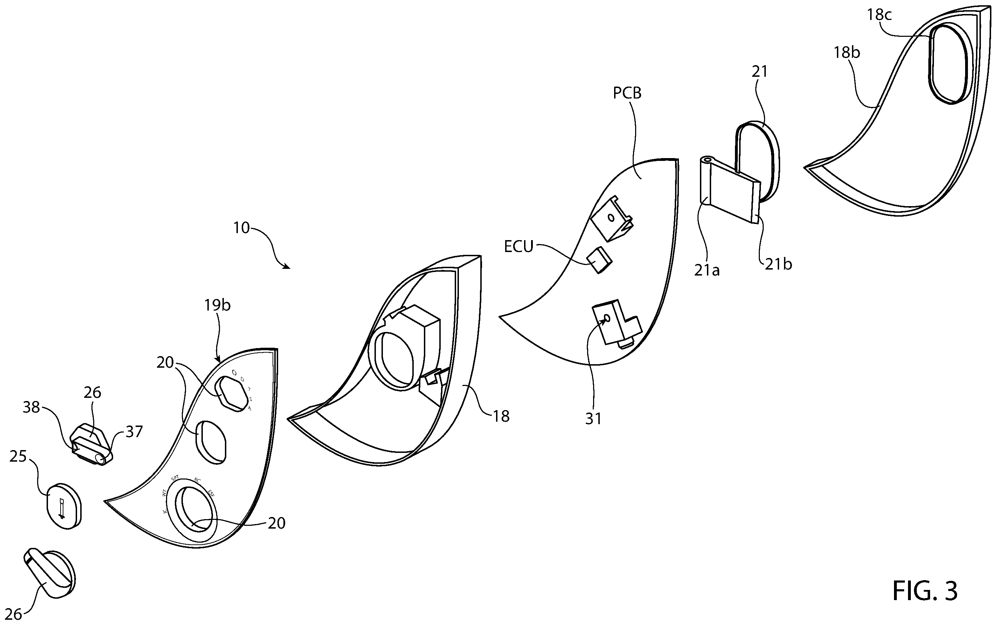

- figure 3 is an exploded view, on a larger scale, of a control interface of the steering wheel,

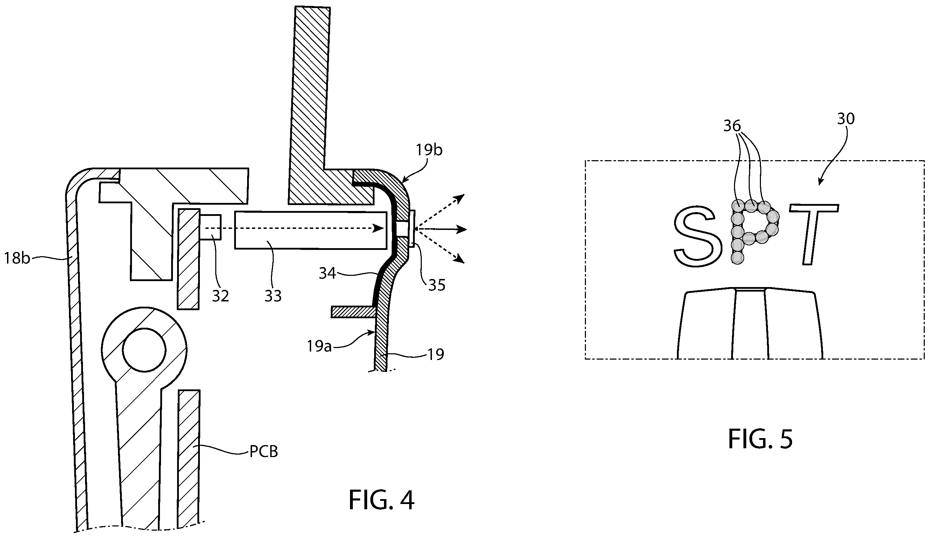

- figure 4 is a cross section of the control interface of figure 3 according to a plane transversal to the steering wheel, and
- figure 5 is a front enlargement of a detail of the control interface of figure 3.

### EMBODIMENTS OF THE INVENTION

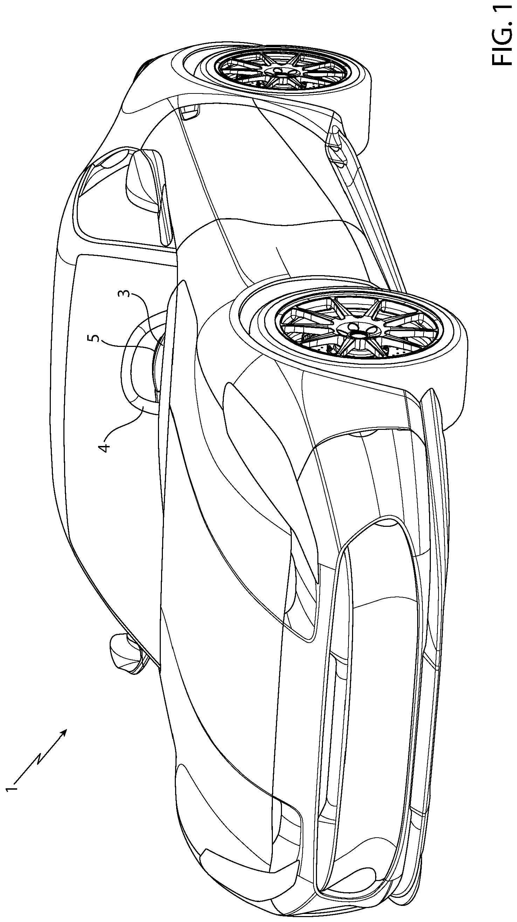

In figure 1, reference number 1 is used to indicate, as a whole, a motor vehicle.

The motor vehicle 1 is provided with a steering wheel 3, in particular within a passenger compartment of the motor vehicle 1.

The motor vehicle 1 has a seat for a driver inside the passenger compartment.

The driver's seat is located in front of the steering wheel 3, according to the travel direction or roll axis or longitudinal axis of the motor vehicle 1.

The steering wheel 3 has a rotation axis A, which has at least one component along the longitudinal axis or is parallel thereto. Therefore, the steering wheel 3 can rotate around the rotation axis A.

The rotation axis A is perpendicular to a relative rotation plane of the steering wheel 3.

The steering wheel 3 has a radially outermost portion with respect to the axis A. The radially outermost portion comprises or is defined by a crown 4. The crown 4 extends in a ring or circumferentially around the axis A.

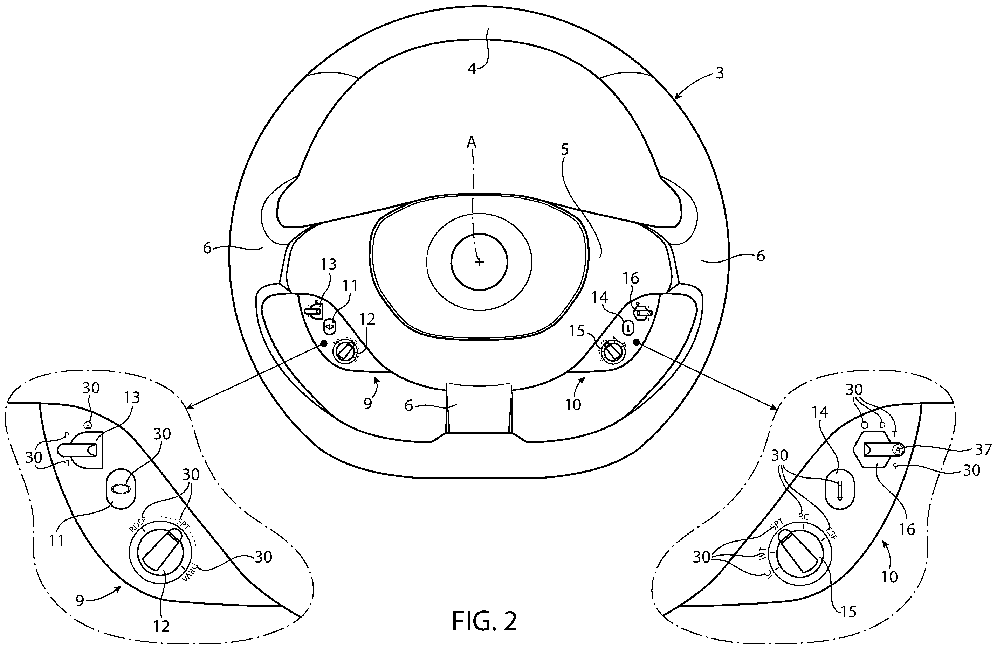

The crown 4 does not necessarily trace a circle, but it could also have one or more flattened areas with respect to an ideal circle, as shown, for example, in figure 2.

Furthermore, the steering wheel 3 comprises a central portion or hub 5 arranged around the rotation axis A. Furthermore, preferably, the hub 5 is arranged in the area of the rotation axis A, i.e. it is ideally crossed by the rotation axis A according to a possible exemplary but not necessarily limiting embodiment.

Moreover, the steering wheel 3 comprises a plurality of radial spokes 6 connecting the central hub 5 to the crown 4, more precisely according to respective radial directions along which the spokes 6 extend.

In the specific example shown in figure 2, there are three spokes 6, although their number could be different, without losing any generality.

Furthermore, the steering wheel 3 comprises two control islands or control boxes 9, 10, for example for controlling the motor vehicle 1.

The number of the control islands 9, 10 could be different, whereby even one single control island, which is not shown herein, would be possible.

The control islands 9, 10 are part of a control interface of the motor vehicle 1. Alternatively or in addition, each one of the control islands 9, 10 can define a separate control interface.

The control islands 9, 10 comprise a plurality of controllers 11, 12, 13, 14, 15, 16 manipulatable by the driver, i.e. the user of the steering wheel 3 and of the motor vehicle 1.

The controllers 11, 12, 13, 14, 15, 16 are manually manipulatable, i.e. by means of the driver's hands.

The controllers 11, 12, 13 specifically belong to the control island 9, while the controllers 14, 15, 16 belong to the control island 10. However, the distribution of the controllers 11, 12, 13, 14, 15, 16 between the two control islands 9, 10 could be different, in particular according to any one of all possible combinations.

In general, the number of controls could be different. For example, each one of the control islands 9, 10 could have a corresponding single controller, which is not shown herein, or a single control island, which is not shown herein, could have one or more controllers as well as the control islands 9, 10 could have other additional controllers, which are not shown herein.

Preferably, each one of the controllers 11, 12, 13, 14, 15, 16 has a corresponding distinct function, i.e. it is manipulatable by the driver to adjust or activate/deactivate respective functions of the motor vehicle 1.

Each one of the control islands 9, 10 comprises a respective box or casing 18 defining a corresponding inner cavity.

Furthermore, each one of the control islands 9, 10 comprises a respective cover 19 fixed to the relative casing 18 so as to cover or close the inner cavity. The cover 19 comprises or, specifically, is a glass plate.

Herein, the term glass can be understood in a broad way, i.e. so as to include not only actual glass, but also materials, for example plastic materials, known as having characteristics simulating those of glass, i.e. in particular transparent materials, with reflecting properties and preferably more brittle than ductile (for example polymethylmethacrylate or polycarbonate).

Even more in general, the cover 19 comprises or is a transparent plate, i.e. provided with a certain degree of transparency or, more specifically, totally transparent or 100% transparent.

More in detail, the cover 19 or the relative plate has an inner face 19a facing the relative cavity according to a direction entering the rotation plane of the steering wheel 3 and preferably parallel to the rotation axis A and/or to the longitudinal axis of the motor vehicle 1.

Furthermore, the cover 19 or the relative plate has an outer face 19b opposite the inner face 19a according to the aforementioned entering direction. Therefore, the outer face 19b faces, in use, the driver, i.e. the user of the steering wheel 3, or the driver's seat.

Each casing 18 is fixedly hung or attached, in particular directly, to a corresponding one of the spokes 6.

The casing 18 extends in a projecting manner with respect to the spoke 6 to which it is fixed, in particular towards the crown 4, more in particular radially.

Furthermore, the casing 18 is arranged laterally with respect to the hub 5, in particular according to an arrangement adjacent to the hub 5.

In other words, the casing 18 occupies or is arranged in the area of a sector or empty space delimited by two of the spokes 6, one of which specifically is the one to which it is fixed, the crown 4 and the central hub 5.

In practical terms, the casing 18 presents itself as an ear with respect to the hub 5 with at least one or more attachment points in the area of one of the spokes 6.

What has been disclosed so far on the arrangement of the casing 18 also applies to the cover 19 fixed thereto and, more in general, to the control islands 9, 10 as a whole.

Precisely, the control islands 9, 10 are arranged symmetrically with respect to the centre of the steering wheel 3 or to the axis A.

The controllers 11, 12, 13, 14, 15, 16 are coupled to the casings 18 of the relative control islands 9, 10 in a movable manner with respect to the casings 18 and also to the corresponding covers 19.

The controllers 11, 12, 13, 14, 15, 16 are arranged through respective seats 20 formed on the relative covers 19 or on the respective plates along the aforementioned entering direction. In other words, the controllers 11, 12, 13, 14, 15, 16 are inserted into the seats 20 along the entering direction.

The controllers 11, 12, 13, 14, 15, 16 are supported in a movable manner by the casings 18 and/or by the covers 19 or by the relative plates, in particular inside the relative seats 20.

Preferably, the seats 20 comprise or are defined by respective through holes of the covers 19.

More in detail, each one of the casings 18 comprises a further cover 18b, which covers the relative cavity on the opposite side with respect to the cover 19, according to the aforementioned entering direction. Hence, the cover 18b has an inner face facing the cavity and an outer face facing the front of the motor vehicle 1, i.e. facing away from the driver or the driver's seat, according to the direction entering the rotation plane of the steering wheel 3.

In particular, the cover 18b has a through opening 18c.

Each one of the islands 9, 10 preferably has a lever 21 arranged inside the cavity and having an end 21a hinged to the casing 18 and an end 21b opposite the end 21a and manipulatable by the driver through the opening 18c. In other words, the end 21a is aligned with the opening 18c according to said entering direction, so as to be reachable by the driver through the opening 18c.

The lever 21 could be an additional controller in addition to the controllers 11, 12, 13, 14, 15, 16. For example, the lever 21 could be a controller for shifting the gears of the motor vehicle 1, in particular for upshifting or downshifting, or more preferably for turning on the high beams or the windscreen wiper.

Optionally, each one of the control islands 9, 10 comprises a printed circuit board PCB. Preferably, the printed circuit board PCB is housed in the cavity, i.e. inside the relative casing 18, in particular between the covers 19, 18b and more in particular between the cover 19 and the lever 21.

Furthermore, each one of the control islands 9, 10 comprises a control unit ECU, in particular coupled to or mounted on the printed circuit board PCB.

The controllers 11, 12, 13, 14, 15, 16 and possibly the lever 21, if present, are coupled or connected to the control unit ECU through the printed circuit board PCB. The controllers 11, 12, 13, 14, 15, 16 and possibly the lever 21, if present, are configured to emit control signals as a function of how they are manipulated by the driver, i.e. As a function of their arrangement or position or configuration, in particular with respect to the covers 19 or the casings 18.

The emitted control signals reach the control unit ECU through the printed circuit board PCB. The control unit ECU uses the signals to control the motor vehicle 1 according to the emitted signals themselves and to the functions of the specific emitters.

Preferably, one or more of the controllers 11, 12, 13, 14, 15, 16 and specifically the controllers 11, 14 comprise a manipulatable portion 25, which is transparent or more specifically is a glass manipulatable portion, for example according to the broadest interpretation of the term glass, as already specified above, or according to a narrow interpretation of the term glass.

Specifically, the controllers 11, 14 are buttons. The manipulatable portion 25 is the pressable portion of the button.

The manipulatable portion 25 preferably is the only portion exposed to the outside of the casing 18 or to the driver, i.e. the only portion visible from the outside of the casing 18.

For example, the controller 11 is used to turn the high beams of the motor vehicle 1 on and off.

Furthermore, for example, as explained more in detail below, the controller 14 is designed to activate and disable an uncoupling of the adjustment of the suspensions of the motor vehicle 1 with respect to the setting or selection of a pre-established dynamic configuration or pre-established set-up of the motor vehicle 1. This will become clearer as a result of the explanation of the controllers 12, 15.

Furthermore, preferably, one or more of the controllers 11, 12, 13, 14, 15, 16 or more specifically the controllers 12, 13, 15, 16 comprise respective knobs 26, which comprise or are made of a metal, specifically aluminium. In other words, the knobs 26 are metallic.

Each one of the knobs 26 is can rotate around a knob axis of its own parallel to the aforementioned entering direction.

Specifically, each one of the controllers 12, 15 is used to set or select a dynamic configuration or a set-up of the motor vehicle 1 among various pre-established options available (for example, a configuration designed for wet roads, a sports configuration and the like).

Herein, each one of the pre-established options available corresponds to a specific angular position of the relative knob 26.

Furthermore, preferably, each of the pre-established options also corresponds to a specific configuration or adjustment of the suspensions of the motor vehicle 1.

Hence, as mentioned above, the controller 14 is used to uncouple the configuration or adjustment of the suspensions from the options selected through the controllers 12, 15.

Furthermore, in particular, the controller 13 is used to set a cruise control function for the motor vehicle 1.

The cruise control function sets a cruise speed, which is automatically pursued by the motor vehicle 1.

Therefore, the controller 13 is designed to set the cruise speed of the motor vehicle 1.

Herein, the cruise speed set by the controller 13 corresponds to the angular position of the relative knob 26.

Furthermore, in particular, the controller 16 is used to operate a windscreen wiper of the motor vehicle 1. Herein, each one of the levels of operating speed of the windscreen wiper corresponds to a specific angular position of the knob 26.

Furthermore, the steering wheel 3 comprises a plurality of indicators 30 fixed on the plates of the covers 19 and/or on the manipulatable portions 25.

In general, the indicators 30 are configured to indicate or mark one or more of the controllers 11, 12, 13, 14, 15, 16 or more precisely the arrangement or configuration or function of one or more of the controllers 11, 12, 13, 14, 15, 16.

In greater detail, each one of the controllers 11, 12, 13, 14, 15, 16 is associated with one or more of the indicators 30, which indicate the arrangement or configuration or function of the corresponding controllers 11, 12, 13, 14, 15, 16.

Alternatively or in addition, some of the indicators 30 are used to indicate the possibility of moving the relative one of the controllers 11, 12, 13, 14, 14, 16 to a specific position in association with a specific setting selectable through the relative one of the controllers 11, 12, 13, 14, 15, 16.

In particular, the controllers 11, 14 have respective indicators 30 fixed on the manipulatable portions 25; in particular, the indicators 30 fixed on the manipulatable portions 25 of the controllers 11, 14 are symbols indicating the respective functions of the controllers 11, 14, i.e. indicative of what will be controlled by manipulating the controllers 11, 14.

Furthermore, these indicators 30 of the controllers 11, 14 described above also indicate the arrangement of the controllers 11, 14, since the driver recognizes the position of the controllers 11, 14 also thanks to the indicators 30 displayed on the manipulatable portions 25.

Preferably, the indicators 30 associated with the controllers 12, 15 are fixed on the respective covers 19, i.e. on the glass plates, and are arranged around the knobs 26, in particular along a circumferential direction, with a predetermined, in particular even, spacing. More in particular, each one of the indicators 30 associated with the controllers 12, 15 symbolises a specific dynamic configuration of the motor vehicle 1. According to the embodiment shown herein, each one of the indicators 30 associated with the controllers 12, 15 is a string identifying the specific configuration indicated.

Furthermore, at least one of the indicators 30 associated with the controller 13 and at least one of the indicators 30 associated with the controller 16 are fixed on the respective covers 19, i.e. on the glass plates, close to the relative knobs 26 and symbolise the respective functions of the controllers 13, 16, i.e. they are indicative of what will be controlled by manipulating the controllers 13, 16.

Moreover, other indicators 30 associated with the controllers 13, 16 are fixed on the respective covers 19, i.e. on the glass plates, and are arranged around the knobs 26, in particular along a circumferential direction, with a predetermined, in particular even, spacing.

Preferably, the steering wheel 3 has a backlight device 31 configured to illuminate the indicators 30, for example in a consistent manner with the arrangement or configuration or manipulation of the controllers 11, 12, 13, 14, 15, 16 or alternatively regardless thereof.

In other words, for example, the control unit ECU is configured to control the backlight device 31 for illuminating the indicators 30, for example based on how each one of the controllers 11, 12, 13, 14, 15, 16 is manipulated.

For example, the indicators 30 associated with the controllers 11, 14 could be illuminated when the high beams and the suspension uncoupling function are respectively activated.

Similarly, for example, the backlight device 31 could illuminate one of the indicators 30 when the relative knob 26 is moved to a specific corresponding angular position. In particular, the illuminated one of the indicators 30 is indicative of how the relative one of the controllers 12, 13, 15, 16 acts upon the motor vehicle 1, in a manner corresponding to the specific angular position of the knob 26.

In addition, for example, the indicators 30 symbolising the functions of the controllers 13, 16 could be illuminated when the cruise control function and the windscreen wipers are respectively in operation, i.e. when the device or the function operated by the controllers 13, 16 is activated.

Alternatively, all the indicators 30 or some specific indicators 30 could always be illuminated or, more precisely, they could be illuminated when an electrical system of the motor vehicle 1 is turned on (typically, in the so-called key-on condition).

Preferably, the backlight device 31 is arranged inside the cavity of the relative casing 18 and is optionally coupled to the printed circuit board PCB. Furthermore, the control unit ECU is conveniently connected to the backlight device 31 through the printed circuit board PCB.

More in detail, the backlight device 31 comprises a plurality of light sources 32 (for example, defined by LEDs), in particular independent of one another. The light sources 32 are configured to emit light towards the indicators 30, so that the light is irradiated onto the indicators 30.

The light sources 32 are fixed to the printed circuit board PCB, in particular directly, and face the indicators 30.

Furthermore, the backlight device 31 preferably comprises light guiding members 33 arranged between the light sources 32 and the indicators 30 to direct the light emitted by the light sources 32 onto the indicators 30.

Conveniently, the cover 19 comprises a layer of paint 34, in particular opaque, which covers the inner face 19a and is configured to prevent light from going through the cover 19. The paint layer 34 covers the entire inner face 19a, except for the areas corresponding to the indicators 30, so that the latter can be backlit by the light produced by the backlight device 31. The areas without coating or uncovered areas of the inner face 19a are preferably obtained through laser engraving on the paint layer 34.

Preferably, each one of the indicators 30 comprises a film or layer 35 deposited on the transparent or glass plate, i.e. on the outer face 19b, or on the manipulatable portion 25, based on the type of the indicators 30.

The film 35 has a material which preferably comprises a metal, for example aluminium. Therefore, the film 35 is metallic.

The film 35 is deposited by means of a technique known as Physical Vapor Deposition (PVD). Therefore, the material of the film 35 is a material suited for physical vapor deposition.

The film 35 conveniently has a plurality of holes or micro-holes 36 arranged so as to form a graphic pattern on the film 35. The graphic pattern substantially performs the function of the relative indicator 30, i.e. that of providing indications or indicating.

Thanks to the film 35, the indicator 30 has a portion that appears or is slightly embossed with respect to the transparent or glass plate.

The micro-holes 36 are used to promote the passage of light with greater quality, thus increasing the definition of the indicator 30.

Each one of the micro-holes 36 has a width dimension or diameter of less than one tenth of a millimetre and preferably greater than one hundredth of a millimetre.

Furthermore, each one of the micro-holes 36 is spaced apart from another adjacent one of the micro-holes 36 by a distance or spacing of less than one tenth of a millimetre and preferably greater than four hundredths of a millimetre.

Preferably, the micro-holes 36 are evenly distributed within the graphic pattern, in particular with the aforementioned spacing of less than one tenth of a millimetre.

According to a preferred, though non-limiting embodiment, one or more of the knobs 26, in particular that of the controller 16, carry a lens 37 in a fixed position.

For at least one angular position of the knob 26, the lens 37 faces one of the indicators 30, in particular fixed on the transparent or glass plate.

More in particular, the lens 37 has a surface facing one of the indicators 30, specifically according to a direction parallel to the rotation axis or knob axis of the knob 26. The lens 37 has a further surface opposite the previous one, specifically according to said direction parallel to the rotation axis of the knob 26.

The lens 37 is configured to project an image of the indicator 30 onto the further surface opposite the one facing the indicator 30 itself.

Preferably, the lens 37 does not perform any magnification or narrowing of the image. In other words, the lens 37 transfers the image of the indicator 30 from the transparent or glass plate to the further opposite surface, which faces the driver or the driver's seat. In this way, the driver perceives the image of the indicator 30 in an highlighted manner.

Specifically, the knob 26 has an arm 38, which radially extends from the rotation axis or the knob axis of the knob 26 until it ends with a radially outermost end in the area the indicator 30 or more precisely in the area of the circumferential direction along which the indicators 30 associated with the knob 26 are arranged around the knob 26 itself.

The lens 37 is arranged in the area of the radially outermost end of the arm 38.

Owing to the above, the advantages of the steering wheel 3 according to the invention are evident.

The choice of the transparent material of the covers 19, in particular together with the metallic material of the knobs 26, gives the control islands 9, 10 an appearance that strongly captures the attention of the driver, who recognises the arrangement, configuration and function of the controllers 11, 12, 13, 14, 15, 16 in an evident and satisfactory manner.

The location of the control islands 9, 10 is convenient for the driver as it is easily accessible.

The use of the film 35, in particular with the micro-holes 36, guarantees a particular shine and brightness of the indicators 30, while respecting the aesthetic quality of the steering wheel 3, without sacrificing the user-friendliness of the steering wheel 3 itself.

Finally, the steering wheel 3 according to the invention can be subjected to changes and variants, which, though, do not go beyond the scope of protection set forth in the appended claims.

In particular, the number of the various components described herein is a mere example, but their number could change.

Furthermore, the adjective first relating to a component does not imply the presence of a second component.

Finally, the various details disclosed within the description are independent of one another.

## Claims

1. Steering wheel (3) for a motor vehicle (1), the steering wheel having an axis of rotation (A) perpendicular to a plane of rotation of the steering wheel and comprising a control box (9, 10), in turn comprising
- a printed circuit board (PCB),
- a casing (18) defining a cavity housing the printed circuit board (PCB),
- a cover (19) attached to the casing (18) so as to cover the cavity with an inner face (19a) facing the cavity according to a direction entering the plane of rotation of the steering wheel and an outer face (19b) opposite the inner face (19a) so as to face, in use, a user of the steering wheel (3), and
- at least one controller (11, 12, 13, 14, 15, 16), which is manipulatable by the user, coupled to the casing (18) in a movable manner with respect to the cover (19), and arranged through a relative seat (20) formed on the cover along said direction,
**characterized in that** the cover (19) comprises a transparent plate or glass plate.

2. The steering wheel according to claim 1, comprising one or more indicators (30), which are fixed on said plate and/or on a transparent or glass manipulatable portion (25) of the controller (11, 12, 13, 14, 15, 16) and configured to indicate the controller (11, 12, 13, 14, 15, 16).

3. The steering wheel according to claim 2, comprising
- a backlight device (31) coupled to the printed circuit board (PCB) within the cavity and configured to illuminate the one or more indicators (30), and
- a control unit (ECU) connected to the backlight device (31) via the printed circuit board (PCB) and configured to control the backlight device (31) to illuminate the one or more indicators (30).

4. The steering wheel according to claim 3, wherein the control unit (ECU) is coupled to the controller (11, 12, 13, 14, 15, 16) and is configured to control the backlight device (31) based on how the controller (11, 12, 13, 14, 15, 16) is manipulated.

5. The steering wheel according to any one of claims 2 to 4, wherein the one or more indicators (30) comprise a film (35) deposited on said plate or on the transparent or glass manipulatable portion (25) by physical vapor deposition.

6. The steering wheel according to claim 5, wherein the film (35) has a plurality of micro-holes (36) arranged to form a graphic pattern on the film (35).

7. The steering wheel according to claim 6, wherein each of the micro-holes (36) has a width dimension or diameter of less than one-tenth of a millimeter.

8. The steering wheel according to claim 6 or 7, wherein each of the micro-holes (36) has a spacing from another adjacent micro-holes (36) of the micro-holes (36) less than one-tenth of a millimeter.

9. The steering wheel according to any one of the preceding claims, further comprising
- a crown (4) extending in a ring shape about the axis of rotation and defining a radially outermost portion of the steering wheel relative to the axis of rotation (A),
- a central hub (5) about the axis of rotation (A), and
- a plurality of radial spokes (6) connecting the central hub (5) to the crown (4),
in which the casing (18) hangs fixedly from one of the spokes (6), so as to be arranged at an empty sector between said one of the spokes (6), another of the spokes (6), the crown (4), and the central hub (5).

10. The steering wheel according to any one of the preceding claims, wherein the controller (11, 12, 13, 14, 15, 16) comprises a knob (26) rotatable about a knob axis parallel to said direction.

11. The steering wheel according to claim 10, wherein the knob (26) carries a lens (37) in a fixed position, and wherein the lens (37) has a first surface facing toward a first indicator (30) fixed on said plate for at least one position of the knob (26), the lens (37) being configured to project an image of the first indicator (30) onto a second surface of the lens (37) opposite said first surface.

12. The steering wheel according to claim 10 or 11, wherein the knob (26) comprises a metal, preferably aluminium.

13. The steering wheel according to any of the preceding claims, wherein the seat (20) is obtained on said plate.

14. The steering wheel according to any of the preceding claims, wherein the cover (19) is said plate.
